(19) Europäisches Patentamt
European Patent Office
Office européen des brevets

(11) **EP 0 424 111 B1**

(12) **EUROPEAN PATENT SPECIFICATION**

(45) Date of publication and mention
of the grant of the patent:
**18.06.1997 Bulletin 1997/25**

(51) Int Cl.6: **H04N 5/18**, H04N 5/217,
H04N 9/64

(21) Application number: **90311351.2**

(22) Date of filing: **17.10.1990**

(54) **Video signal processing apparatus**

Vorrichtung zur Verarbeitung eines Videosignals

Appareil de traitement de signal vidéo

(84) Designated Contracting States:
**DE FR GB**

(30) Priority: **18.10.1989 JP 270771/89**
**18.10.1989 JP 270773/89**

(43) Date of publication of application:
**24.04.1991 Bulletin 1991/17**

(60) Divisional application: **95202352.1**

(73) Proprietor: **SONY CORPORATION**
**Tokyo 141 (JP)**

(72) Inventors:
• **Sase, Masatoshi, c/o Patents Division**
**Shinagawa-ku, Tokyo 141 (JP)**

• **Onga, Makoto, c/o Patents Division**
**Shinagawa-ku, Tokyo 141 (JP)**

(74) Representative: **Turner, James Arthur et al**
**D. Young & Co.,**
**21 New Fetter Lane**
**London EC4A 1DA (GB)**

(56) References cited:
**EP-A- 0 291 354          EP-A- 0 339 718**
**US-A- 4 437 112          US-A- 4 742 392**

• **PATENT ABSTRACTS OF JAPAN vol. 11, no. 17**
**(E-471)(2464) 17 January 1987**
• **PATENT ABSTRACTS OF JAPAN vol. 9, no. 225**
**(E-342)(1948) 11 September 1985**
• **PATENT ABSTRACTS OF JAPAN vol. 12, no. 250**
**(E-633)14 July 1988**

## Description

This invention relates to video signal processing apparatus.

In video image pick-up apparatus, such as television cameras (for example, television cameras having charge coupled device (CCD) pick-up devices), still video cameras and video signal processing circuits used with such cameras, several stages of processing circuitry carry out operations which are dependent upon a reference video signal level, such as that which represents black information. The accuracy with which such signal processing operations are performed is dependent upon a reference black level which best represents the optical black level that may be derived from the image pick-up device, even if the scene being imaged does not then contain black information. A typical video camera, whether of the CCD-type or otherwise, scans information imaged onto a pick-up element in a line-by-line raster array formed of a line scanning period, during which useful video information is scanned, followed by a flyback period, during which the video camera is conditioned to scan the next line of image information. Usually, information representing a desired black reference signal level is inserted into the video signal during the flyback period. Luminance and chrominance components which are derived from the image information produced by the pick-up element are formed relative to this reference black signal level.

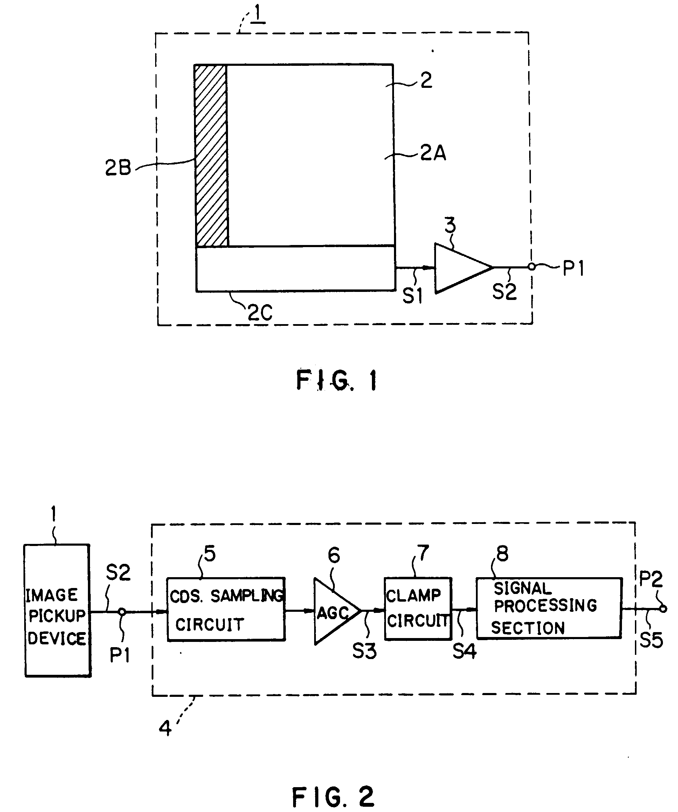

One example of a CCD imaging arrangement in which a black reference signal level is inserted into a horizontal flyback period of the video signal produced by a television camera is illustrated in Figure 1. Here, an image pick-up device 1 is represented as a CCD device 2 having a useful image pick-up surface 2A and light-shielded optical black surface 28 adjacent to the pick-up surface 2A. Electrical signals produced as stored charges across the CCD device 2, including the signals produced across the pick-up surface 2A and the optical black surface 2B, and shifted on a line-by-line basis into a horizontal storage register 2C from which the contents are read out in serial fashion. The resultant photoelectric output $S_1$ from the horizontal register 2C is amplified and supplied to an output terminal $P_1$ as an image pick-up signal $S_2$.

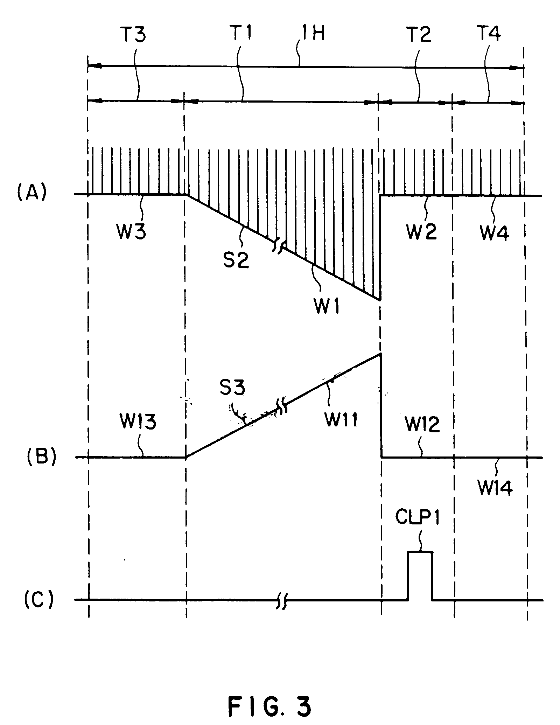

A schematic representation of the image pick-up signal $S_2$ is illustrated as the waveform shown in Figure 3A. The image pick-up signal $S_2$ comprises useful video information $W_1$ produced during a line scanning period $T_1$, followed by the flyback period formed of portion $T_2$, $T_4$ and $T_3$. The sum of these periods $T_1$ to $T_4$ is equal to a horizontal scanning interval, known as a "1H" interval. During the portion $T_2$ of the horizontal flyback period, the signal $W_2$ derived from the scanned black surface 28 of Figure 1 is generated. The level of this signal $W_2$ is the black reference signal level produced by the CCD device 2 and is equal to the video information produced when a truly black image is scanned.

When the image pick-up device 1 of Figure 1 is used with other signal processing circuitry of the type normally included in a video camera, the image pick-up signal $S_2$ produced by the image pick-up device 1 is supplied to a processing circuit, such as circuit 4 shown in Figure 2. The image pick-up signal $S_2$ is sampled by a correlated double sampling (CDS) circuit 5, as schematically represented in Figure 3A. The sampled signal is subjected to automatic gain control by an AGC circuit 6 to produce an image signal $S_3$ having the waveform shown in Figure 3B. Here, the image signal $S_3$ comprises useful video information $W_{11}$ during the line scanning period $T_1$, and the black reference signal level $W_{12}$ derived from the black surface 2B during the portion $T_2$ of the horizontal flyback period. The black reference signal level $W_{12}$ is referred to as the optical black signal level. The image signal also includes a blank signal $W_{14}$ during the portion $T_4$ of the flyback period, as well as a blank signal $W_{13}$ during that portion $T_3$ of the flyback period which immediately precedes the scanning period $T_1$.

The image signal $S_3$ shown in Figure 3B is applied to a clamp circuit 7. The clamp circuit 7 is provided with a clamp pulse $CLP_1$, shown in Figure 3C, during the portion $T_2$ of the flyback period to clamp the signal level of the image signal during the portion $T_2$ to the optical black signal level $W_{12}$ which then is present in the image signal $S_3$. The clamp circuit 7 supplies to a signal processing section 8 the clamped image signal $S_4$ (whose waveform is similar to that of the signal $S_3$ in Figure 3B) with the optical black signal level $W_{12}$ properly clamped to the level derived from the scanning of the black surface 2B of the CCD device 2. The signal processing section 8 utilizes the clamped optical black signal level $W_{12}$ as a reference from which various video processing operation are carried out. The resultant processed video signal $S_5$ is supplied to an output terminal $P_2$ by the signal processing section 8.

Typical processing operations that may be carried out by the signal processing section 8 include gamma correction, luminance signal derivation, chrominance signal carrier balance, 1H delay circuit gain adjustment, aperture control and horizontal synchronizing signal generation. These operations typically rely upon a fixed, unvarying reference signal level that is related to the image signal produced by the CCD device 2. By using the optical black signal level $W_{12}$ derived from the black surface 2B, a proper reference signal level is obtained. However, the signal processing section 8 normally is formed of a number of individual operating stages, each arranged to carry out a respective signal processing operation. In doing so, each stage establishes its own reference signal level in order to execute its designated operation; and this is done by clamping the optical black signal level $W_{12}$ which had already been clamped by the clamp circuit 7.

As each stage carries out its own individual clamping operation, inconsistencies and/or errors may be introduced into the signal level which ultimately is clamped. That is, although the optical black signal level $W_{12}$ present in the clamped image signal $S_4$ may be accurate, subsequent clamping operations carried out on this optical black signal level may be accompanied by noise, which results in an inaccurate noise-induced clamped reference signal level for a particular stage. In another stage, the clamped reference signal level may include a leakage voltage from the clamping pulse itself, which deforms the reference signal level in that stage. Consequently, the reference level which should be uniform in all stages may vary from one stage to another because of inaccuracies introduced by the individual clamping operations that are carried out by each such stage. The likelihood of such deviations in the reference level increases as the number of signal processing stages and, thus, the number of individual clamping operations, increases. Hence, errors may develop because signal operations which are carried with the expectation that they all are referenced to the same reference level are, in fact, performed on the basis of different reference levels. Clearly, this is a drawback and disadvantage attending known video cameras and the video signal processing circuits used with those cameras.

Some colour video cameras include an optical complementary colour matrix filter through which the optical image of a scene is projected to the image pick-up device. A small portion of such a complementary colour matrix filter is schematically illustrated in Figure in as including successive rows of alternating colour filter elements. For example, one row comprises alternating yellow and cyan filter elements $Y_E$, $C_Y$, $Y_E$, $C_Y$, ..., etc, and the next row is formed of alternating magenta and green filter elements $M_G$, G, $M_G$, G, ..., etc. Thus, the complementary colour matrix filter comprises one row formed of alternating $Y_E$ and $C_Y$ elements followed by the next row formed of alternating $M_G$ and G elements, and so on. Typically, the photoelectric signals which are produced by the image pick-up element in response to a visual scene being imaged through the matrix filter are scanned such that those signals produced in response to the imaging through two adjacent rows of filter elements are scanned simultaneously. Thus, when a CCD image pick-up device is used, the charges stored as a result of imaging through two vertically adjacent rows are scanned simultaneously when one horizontal raster line of image signals is produced.

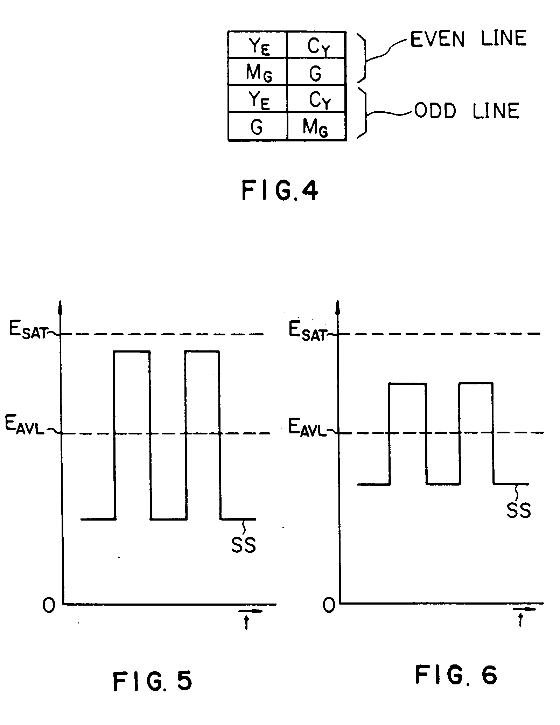

Often, the patterns of the adjacent rows of filter elements from which an even scan line of image signals is produced differ from the patterns of the adjacent rows of filter elements from which an odd scan line of image signals is produced. This difference generally is equal to one row of filter elements. Accordingly, and with reference to Figure 4, when an even horizontal line is scanned, that is, when an even scan line of image pick-up signals is produced, that scan line may be derived from colour filter elements $Y_E + M_G$, $C_Y + G$, $Y_E + M_G$, $C_Y + G$, etc. However, when an odd line is scanned, the image pick-up signals produced by that odd scan line may be derived from the colour filter elements $Y_E + G$, $C_Y + M_G$, $Y_E + G$, $C_Y + M_G$, etc.

It is appreciated that red and blue colour signals may be formed of predetermined arithmetic combinations of yellow, cyan and magenta signals. For example, the red colour signal may be formed by subtracting a cyan signal from the sum of yellow and magenta signals. As another example, the blue colour signal may be formed by subtracting a yellow signal from the sum of magenta and cyan signals. Furthermore, the luminance signal is a function of the average value of the image pick-up signal derived from all of the filter elements of the complementary colour matrix filter. Thus, by arithmetic combination of the yellow, cyan and magenta signals, red and blue colour difference signals R-Y and B-Y, as well as the luminance signal Y may be obtained.

However, it is known that, for a given brightness of a visual scene, the signal level derived from a yellow filter element $Y_E$ is greater than the signal level derived from a magenta filter element $M_G$ which, in turn, is greater than the signal level derived from a cyan filter element $C_Y$, which is greater than the signal level derived from a green filter element G. Because of this difference in the signal levels, the modulation component produced by the filter elements when an even line is scanned differs from the modulation component that is produced when an odd line is scanned. This difference in the modulation levels is represented by the waveforms shown in Figures 5 and 6.

Figure 5 represents the image pick-up signal produced when an even line is scanned and is derived from the photoelectric signals produced by the filter elements $Y_E + M_G$, $C_Y + G$, $Y_E + M_G$, $C_Y + G$, etc. Figure 6 represents the image pick-up signals produced when an odd line is scanned and is derived from the photoelectric signals produced by the filter elements $Y_E + G$, $C_Y + M_G$, $Y_E + G$, $C_Y + M_G$, etc. For convenience, Figures 5 and 6 also illustrate a saturation voltage level $E_{SAT}$, which represents the level of the image pick-up signal whereat signal processing circuitry to which the image pick-up signal is supplied operates in saturation. It is appreciated that, for proper signal processing, the level of the image pick-up signals should be less than this saturation voltage level $E_{SAT}$. Although the modulation swings of the image pick-up signals produced during the even and odd line scans differ (in the example illustrated, the modulation component produced during even line scans in greater than the modulation component produced during odd line scans), it is assumed that the signal level of the even and odd scan lines does not exceed the saturation voltage level $E_{SAT}$ and, therefore, the average value of these image pick-up signals is substantially equal.

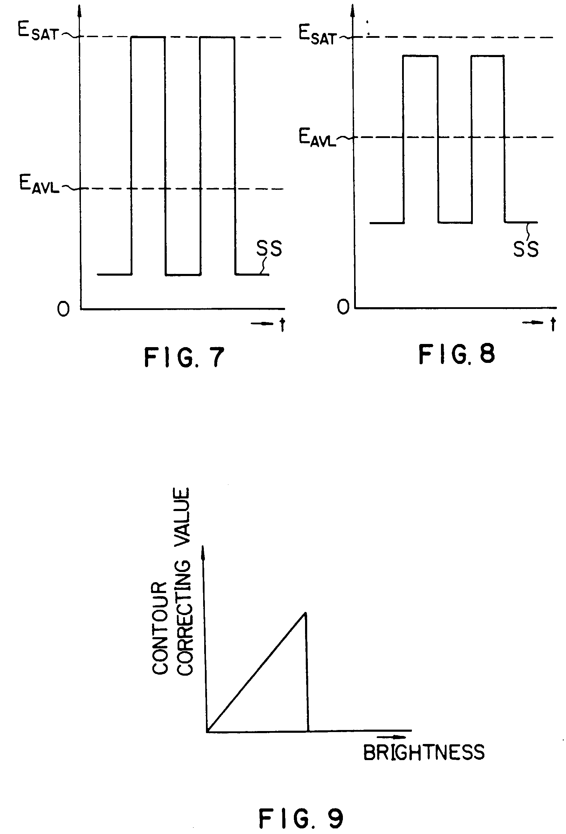

If the brightness of the object being imaged increases, the modulation swings of the image pick-up signals likewise increases, as illustrated in Figures 7 and 8. Consistent with Figures 5 and 6, Figure 7 represents the image pick-up signal produced when an even line is scanned, and Figure 8 represents the image pick-up signal produced when an odd line is scanned. In the example being described, the brightness of the object being imaged is such that the level of the image pick-up signals produced during an even scan line exceeds the saturation voltage level $E_{SAT}$. If the maximum level of the image pick-up signal produced during an odd scan line remains less than this saturation voltage level, then the level of the average value $E_{AVL}$ of the image pick-up signals produced during an even scan line will be less than the level of the average value $E_{AVL}$ of the image pick-up signal produced during an odd scan line. The fact that these average values differ from each other deleteriously influences a contour correction operation that normally is carried out on the image pick-up signals derived from the video camera.

Contour correction in the vertical direction typically is performed by extracting components of adjacent lines of the luminance signal which are not correlated with each other. Such uncorrelated components are emphasized and used to provide contour correction of the luminance signal. From the preceding discussion, it is recognized that the luminance signal is related to the average value of the image pick-up signals derived from the complementary colour matrix filter. Thus, if the levels of the average values of the image pick-up signals produced during the even and odd scan lines differ, such as shown in Figures 7 and 8, the uncorrelated components in successive lines of the luminance signal will be much larger than they should be. In contour correction, the extracted, uncorrelated components are superimposed on the luminance signal. Hence, when the difference in the levels of the average values $E_{AVL}$ of the image pick-up signals produced during even and odd scan lines is large, erroneous contour correction is performed, resulting in degraded quality of the resultant video picture.

It has been proposed, such as in Japanese laid-open patent 269873/88 (JP-A-2 115 622, published on 27 April 1990), to eliminate this difficulty by suspending the contour correction operation if the video signal processing circuits are saturated. However, this requires a rather intricate detecting circuit and adds to the overall complexity of the video signal processing circuitry. Furthermore, if contour correction is suspended when saturation is detected, that is, when the brightness of the object being imaged is relatively high, an abrupt change in picture quality may be observed. Figure 9 is a graphical representation of an abrupt suspension in the contour correcting operation when the brightness of the scene being imaged exceeds a value which would result in saturation of the signal processing circuitry.

Alternative examples of prior art arrangements may be found in United States Patent US-A-4,742,392 and Japanese Patent No. JP-A-60/187,468.

United States Patent US-A-4,742,392 discloses a clamp circuit comprising: clamp means for clamping an input video signal to a predetermined clamp level in an interval corresponding to a first gate signal; clamp level forming means for extracting a signal which was clamped by said clamp means in an interval corresponding to a second gate signal to form said predetermined clamp level; and signal generating means for outputting said first and second gate signals in a predetermined level interval in the signal.

Japanese Patent JP-A-60/187,468 discloses a circuit that clamps a synchronising tip level of a video signal (in circumstances such as slow speed video reproduction) in response to a squelch input, thereby to apply a synchronisation signal even when no horizontal synchronisation pulse is available.

According to the present invention there is provided video signal processing apparatus for use with video imaging means having line scanning and flyback periods, the apparatus comprising:
image signal means for providing useful video information during said line scanning period and an optical black signal level during at least one portion of said flyback period;
the apparatus being characterised by:
replacement means for inserting during another portion of said flyback period a replacement black signal level that is a function of said optical black signal level.

The invention will now be described by way of example with reference to the accompanying drawings, throughout which like parts are referred to by like references, and in which:

Figure 1 is a schematic representation of an image pick-up device;
Figure 2 is a block diagram of signal processing circuitry used with the device of Figure 1;
Figures 3A to 3C are waveform diagrams for the circuitry of Figure 2;
Figure 4 is a schematic representation of a portion of an optical complementary colour matrix filter;
Figures 5, 6, 7 and 8 are waveform diagrams;
Figure 9 is a graphical representation;
Figure 10 is a block diagram of a video signal processing circuit;
Figures 11A to 11F are waveform diagrams for the circuitry of Figure 10;
Figure 12 is a block diagram of a black level clamp replacing circuit shown in Figure 10;
Figure 13 is a block diagram of a portion of a luminance signal processing section shown in Figure 10;
Figure 14 is a block diagram of a contour correcting circuit;
Figures 15, 16 and 17 are graphical illustrations for the circuit of Figure 14; and
Figures 18 and 19 are block diagrams of alternative contour correcting ciruits.

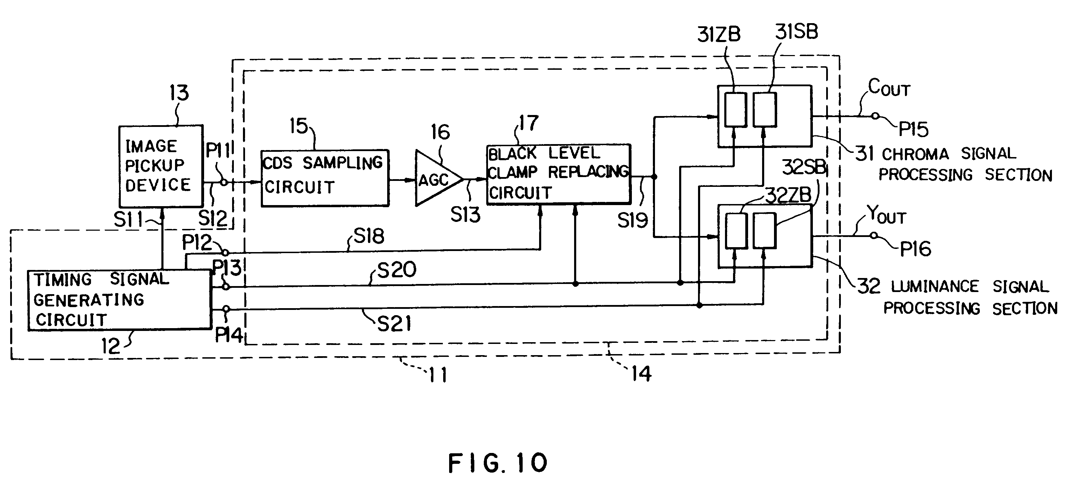

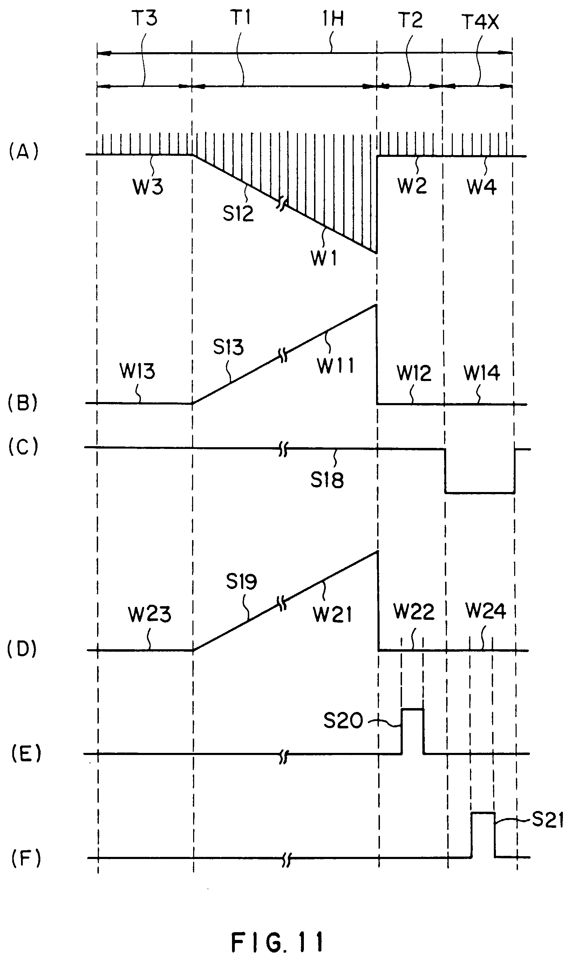

The video signal processing circuitry 11 of Figure 10 is used with an image pick-up device 13 which, for example, may be a solid-state element such as a CCD device supplied with suitable timing signals $S_{11}$ from a timing signal generator 12 for producing line-by-line image pick-up signals $S_{12}$. An illustrative waveform of one line of the image pick-up signal $S_{12}$ is shown in Figure 11A. The image pick-up signal $S_{12}$ is supplied from an output terminal $P_{11}$ of an image pick-up device 13 to a CDS circuit 15 included in an image signal processing circuit 14. Similar to the example of Figure 2, the sampled image pick-up signal produced by the CDS circuit 15 is subjected to automatic gain control by an AGC circuit 16 to produce an image signal $S_{13}$ having the waveform shown in Figure 11B. It will be appreciated that the image signal $S_{13}$ comprises useful video information $W_{11}$ during a line scanning period $T_1$ and a black reference signal level $W_{12}$ during the portion $T_2$ of the horizontal flyback period. Although not shown in Figure 10, the black reference signal level preferably is derived from an optical black surface included in the image pick-up device 13 and is referred to as an optical black signal level. Thus, the image pick-up device 13 shown in Figure 10 may be similar to the image pick-up device 1 of Figure 1.

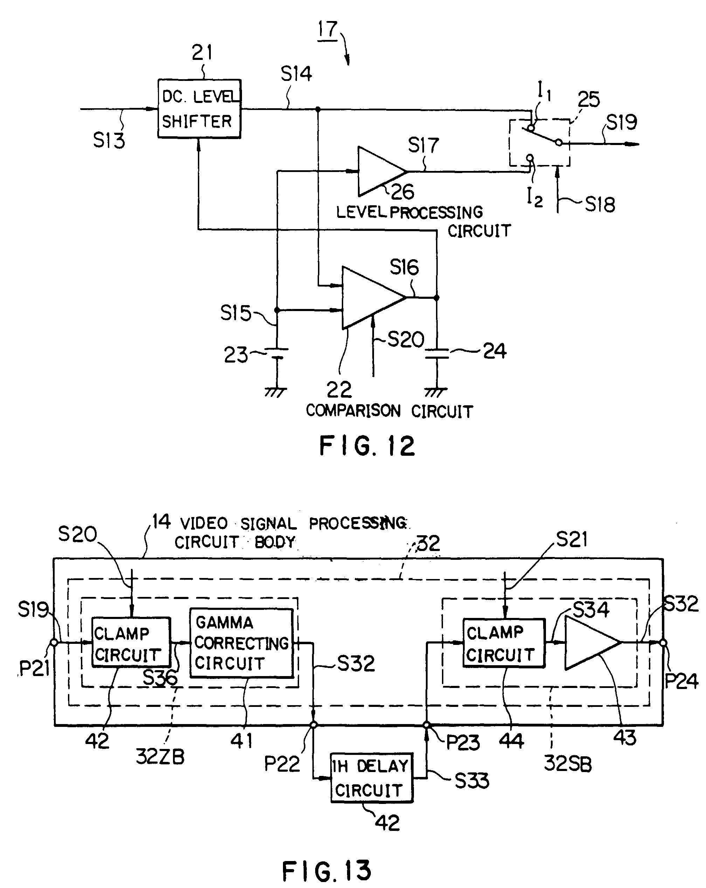

Like the image signal $S_3$ shown in Figure 3, the image signal $S_{13}$ produced by the AGC circuit 16 also includes a blank signal $W_{14}$ during the portion $T_{4X}$ of the flyback period, as well as a blank signal $W_{13}$ during that portion $T_3$ of the flyback period which immediately precedes the scanning period $T_1$. The image signal $S_{13}$ having the general waveform schematically illustrated in Figure 11B is supplied to a black level clamp replacing circuit 17 which functions to replace the blank signal $WE_{14}$ with replacement black signal information that is a function of the optical black signal level $W_{12}$, as will be described below in conjunction with Figure 12. The black level clamp replacing circuit 17 produces an output video signal $S_{19}$ that is coupled to video signal processing sections illustrated as a chrominance signal processing section 31 and a luminance signal processing section 32. As will be described below, each of these signal processing sections 31 and 32 includes a plurality of stages, each of which clamps the output video signal supplied thereto so as to use the clamped black level therein as reference from which signal processing operations are performed.

Advantageously, different stages in each signal processing section are supplied with different timing signals from the timing signal generator 12 so as to clamp the output video signal at different portions of the flyback period. Consequently, one stage in the signal processing section clamps the output video signal at the optical black signal level present at the output of the black level clamp replacing circuit 17, and another stage in the signal processing section clamps the output video signal at the replacement black signal information level which is inserted into the portion $T_{4X}$ of the flyback period by the black level clamp replacing circuit 17, as will now be described. It will be appreciated that, if the optical black signal level and the replacement black signal information level are equal, or otherwise related to each other, errors which may be attributed to a clamping operation when one black level is clamped will not be imparted to other signal processing stages which operate to clamp a different black level. Thus, errors due to noise or leakage of the clamping pulse, as mentioned above, are avoided.

The black level clamp replacing circuit 17 is illustrated in Figure 12 as comprising a DC level shifting circuit 21, a comparator 22, a level processing circuit 26 and a change-over switch 25. The DC level shifting circuit 21 is supplied with the image signal $S_{13}$ and receives a DC control signal from the comparator 22 which determines the DC level of the image signal. Hence, the DC level of the image signal is shifted upward or downward as a function of the comparison. This level-shifted image signal $S_{14}$ is supplied to one input terminal $I_1$ of the change-over switch 25.

The comparator 22 compares the DC level of the level-shifted image signal $S_{14}$ with a reference level $S_{15}$ produced by a reference voltage source 23. Preferably, the comparator 22 is selectively enabled by an enable timing pulse $S_{20}$ produced by the timing signal generator 12 during the portion $T_2$ of the flyback period. When enabled, the output of the comparator 22 is fed back to the DC level shifting circuit 21 to adjust the DC level of the image signal supplied thereto. The DC control signal produced by the comparator 22 is also stored on a capacitor 24 so as to supply a continuous DC level control signal to the DC level shifting circuit 21. It will be seen that the DC level of the image signal thus is controlled so as to be equal to the DC reference level $S_{15}$. Any difference therebetween is detected by the comparator 22 at the enable timing pulse $S_{20}$ and is used to adjust the level-shifted image signal $S_{14}$ in a direction to make the DC level thereof equal to the DC reference level. Hence, undesired DC level changes which may be present in the image signal during a horizontal scanning interval are corrected.

The level processing circuit 26 is illustrated as an amplifier coupled to the reference voltage source 23. The level processing circuit 26 produces a replacement black signal level, also referred to herein as replacement black signal information, merely by amplifying the reference level $S_{15}$ by a suitable gain. Consequently, the reference level is subjected to a level adjustment by the level processing circuit 26 to provide a black signal level substantially equal to the optical black signal level of the level-shifted image signal $S_{14}$. This black signal level $S_{17}$ is applied to the other terminal $I_2$ of the change-over switch 25.

The change-over switch 25 is coupled to the timing signal generator 12 to receive therefrom a change-over timing signal $S_{18}$ which changes the connection of the output of change-over switch 25 from the terminal $I_1$ to the terminal $I_2$. As will be described, the change-over switch 25 normally couples the level-shifted image signal $S_{14}$ to its output but, in response to the change-over timing signal $S_{18}$, the change-over switch 25 couples the black signal level $S_{17}$ to its output. Thus, a portion of the level-shifted image signal which otherwise is present during the duration of the change-over timing signal $S_{18}$ is replaced by the black signal level produced by the level-processing circuit 26. Consequently, the black signal produced by the level-processing circuit 26 is referred to herein as the replacement black signal level. The change-over switch 25 produces an output video signal $S_{19}$ constituted by the level-shifted image signal $S_{14}$ and the replacement black signal level $S_{17}$.

The image signal $S_{13}$ supplied to the black level clamp replacing circuit 17 is illustrated in Figure 11B. The image signal includes the optical black signal level $W_{12}$, and it is this optical black signal level $W_{12}$ that is compared with the reference level $S_{15}$ by the comparator 22. Any differences therebetween are fed back to adjust the DC level of the image signal, resulting in the level-shifted image signal $S_{14}$. The level-shifted image signal $S_{14}$ is supplied through the change-over switch 25 during line scanning period $T_1$ and the portion $T_2$ of the flyback period. Figure 11D illustrates the output video signal $S_{19}$ derived from the level-shifted image signal $S_{14}$ during the periods $T_1$, $T_2$ and $T_3$.

The timing signal generator 12 produces a change-over timing signal $S_{18}$ having a duration equal to the portion $T_{4X}$ of the flyback period. Figure 11C illustrates this change-over timing signal $S_{18}$. In response to the change-over timing signal $S_{18}$, the change-over switch 25 couples the replacement black signal level $S_{17}$ to the output thereof; and the replacement black signal level $S_{17}$ is illustrated as waveform $W_{24}$ in Figure 11D. Thus, the output video signal $S_{19}$ is formed of the level-shifted image signal $S_{14}$, including the useful video information $W_{12}$, the optical black signal level $W_{22}$ and the blank signal $W_{23}$ during the portions $T_1$, $T_2$ and $T_3$, respectively, of the line scanning period. In response to the change-over timing signal $S_{18}$, the change-over switch 25 supplies the replacement black signal level $W_{24}$ during the portion $T_{4X}$ of the flyback period. Nevertheless, this replacement black signal level $W_{24}$ is derived from the reference level $S_{15}$ and is substantially equal to the optical black signal level $W_{22}$.

Figure 11E illustrates the enabling timing pulse $S_{20}$ which is timed to occur during the portion $T_2$ of the flyback period so as to enable the comparator 22 when the optical black signal level is present at the output of DC level shifting circuit 21. If, in response to the enabling pulse $S_{20}$, the comparator 22 detects a difference between the optical black signal level and the reference level $S_{15}$, the DC level of the image signal $S_{13}$ is shifted accordingly to making the compared level equal. Thus, the level of the useful video information $W_{21}$ is shifted in a corresponding manner so as to be properly referenced to the optical black signal level. The level-shifted image signal $S_{14}$ maintains an optical black signal level determined by the reference level $S_{15}$.

The output video signal $S_{19}$ produced by the black level clamp replacing circuit 17 is coupled to the chrominance signal processing section 31 and to the luminance signal processing section 32, as shown in Figure 10. For simplification, each of the signal processing sections 31 and 32 comprises a plurality of stages, illustrated as two stages, supplied with the clamping pulses $S_{20}$ (the clamping pulse $S_{20}$ may be the same as the enabling pulse $S_{20}$ of Figure 11E) and $S_{21}$, respectively, produced by the timing signal generator 12. Accordingly, the chrominance signal processing section 31 is shown with processing stage $31_{zb}$ and processing stage $31_{sb}$ supplied with clamping pulses $S_{20}$ and $S_{21}$, respectively. Similarly, the luminance signal processing section 32 is illustrated with stages $32_{zb}$ and $32_{sb}$ supplied with clamping pulses $S_{20}$ and $S_{21}$, respectively. The structure and operation of each stage form no part of the present invention per se; but it will be appreciated that the successful operation of each stage is dependent, at least in part, on the black reference level present in the output video signal $S_{19}$.

Clamping pulses $S_{20}$ and $S_{21}$ are illustrated in Figures 11E and 11F. It is seen that the clamping pulse $S_{20}$ serves to clamp the optical black signal level $W_{22}$ included in the output video signal $S_{19}$' and the clamping pulse $S_{21}$ serves to clamp the replacement black signal level $W_{24}$ included in the output video signal. Hence, the black level clamped in, for example, the stage $32_{zb}$ may differ from the black level clamped in the stage $32_{sb}$. If these two black levels are substantially equal, as is produced by the black level clamp replacing circuit 17 (and as is shown in Figure 11D), both have the same black signal level as a reference. However, noise which may be superimposed on the optical black signal level $W_{22}$ will not be present on the replacement black signal level $W_{24}$. Similarly, leakage voltage which may be added to the optical black signal level $W_{22}$ by the clamping pulse $S_{20}$ will not be added to the replacement black signal level $W_{24}$.

The clamping pulse $S_{20}$ is used by the stage $31_{sb}$ to clamp the replacement black signal level $W_{22}$ included in the output video signal $S_{19}$; and clamping pulse $S_{21}$ is used by the stage $31_{sb}$ to clamp the replacement black signal level $W_{24}$ included in the output video signal. Hence, the stages $31_{zb}$ and $32_{zb}$ clamp the optical black signal level $W_{22}$ and, thereafter, the stages $31_{sb}$ and $32_{sb}$ clamp the replacement black signal information $W_{24}$. For example, the optical black signal level $W_{22}$ may represent an absolute black level which the stages $31_{zb}$ and $32_{zb}$ need to carry out their respective signal processing. The replacement black signal level $W_{24}$ may represent a black level which the stages $31_{sb}$ and $32_{sb}$ need to control the dynamic range of the useful video information included in the output video signal. With the video signal processing circuitry shown in Figure 10, the clamping operation which requires the absolute black level (as carried out by the stages $31_{zb}$ and $32_{zb}$) is suspended when the clamping operation which utilizes the black level needed for dynamic range adjustment (as carried out by the stages $31_{sb}$ and $32_{sb}$) is performed.

One example of the stages $32_{zb}$ and $32_{sb}$ that may be included in the luminance signal processing section 32 is illustrated in Figure 13. Although these stages are described as being included in the luminance signal processing section 31.

As shown, the stage $32_{zb}$ may include a gamma correcting circuit 41 to carry out gamma correction on the video output signal $S_{19}$ supplied thereto. The stage $32_{sb}$ comprises for example, a gain control circuit 43 which functions to adjust the gain of the gamma-corrected output video signal supplied to the gain control circuit by way of a 1H delay circuit 42. As an alternative, the stage $32_{zb}$ (or the stage $31_{zb}$) may include a luminance signal set-up stage or an chrominance signal carrier balance stage. The stage $32_{sb}$ (or the stage $31_{sb}$) may include the illustrated Itt delay gain adjusting stage, an aperture control stage or a horizontal synchronizing signal stage. In the illustrated example, the gamma correction circuit 41 is supplied with a black level reference signal $S_{36}$ produced by a clamp circuit 44 which clamps the output video signal $S_{19}$ in response to the clamping circuit $S_{20}$ (shown in Figure 11E). Hence, the gamma correcting circuit is supplied with the optical black signal level $W_{22}$ which is obtained by the clamp pulse $S_{20}$ Similarly, the gain control circuit 43 is supplied with a black level reference signal produced by clamp circuit inin in response to the clamping pulse $S_{21}$ (shown in Figure 11F) which clamps the 1H delayed gamma-corrected output video signal. The gain control circuit 43 thus is supplied with a black reference level $S_{34}$ which is produced by clamping the replacement black signal level $W_{24}$ (Figure 11D) in response to the clamping pulse $S_{21}$ (Figure 11F). Hence, the gain control circuit 43 responds to the replacement black signal level to establish the proper dynamic range for the useful video information $W_{21}$ of the video signal.

By using the replacement black signal level $W_{24}$ as the reference signal for the gain control circuit 43, the possibility of noise signals that may be superimposed onto the optical black signal level $W_{22}$, or of distortion in the reference signal due to leakage of the clamping pulse $S_{20}$ is avoided. Since different clamping pulses are used to clamp different reference black levels $W_{22}$ and $W_{24}$ in the horizontal flyback period, any leakage or noise which may be present in the replacement black signal level $W_{24}$ does not adversely affect the reference level which is derived from the optical black signal level $W_{22}$. Hence, processing operations which rely upon an absolute black level, as will be obtained from the optical black signal level $W_{22}$, are performed accurately and without interference from distortions that may be introduced to the replacement black signal level $W_{24}$. Similarly, operations in which the dynamic range of the video signal is controlled by the replacement black signal level $W_{24}$ are performed accurately and without interference that otherwise may be introduced by distortions in the optical black signal level $W_{22}$.

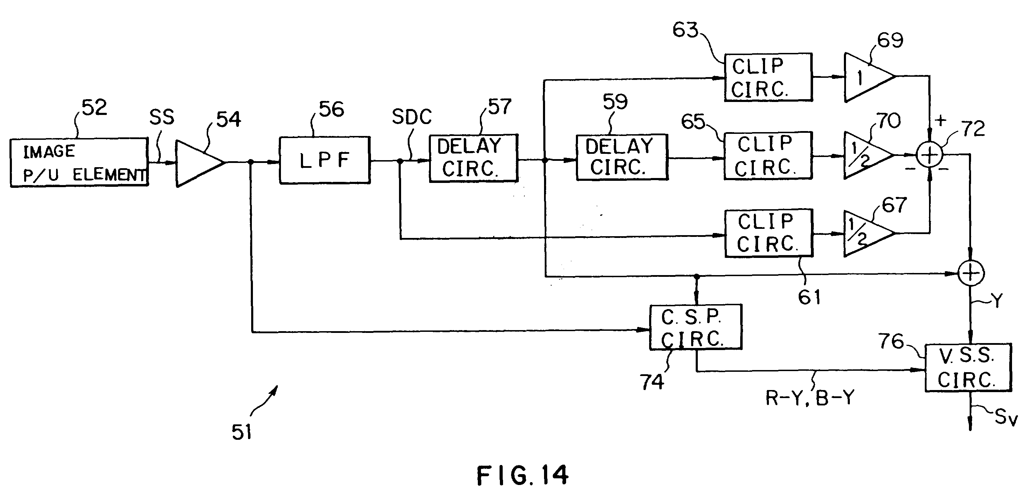

Turning now to Figure 14, there is illustrated a block diagram of a contour correcting circuit that may be used for contour correction of the video signal derived from an image pick-up element 52 having an image projected thereto through an optical complementary colour matrix filter of the type shown in Figure 4. The image pick-up element 52 is coupled to a low-pass filter 56 by an amplifier 54. The low-pass filter 56 serves to remove the modulation components in a scan line of image pick-up signals caused by the patterns of filter elements included in the colour matrix filter. Hence, the low-pass filter 56 produces an averaged scan line of image signals. Thus, and with reference to Figures 5 and 6, the modulation components attributed to the filter elements $Y_E + M_{G'}$, $C_Y + G$, $Y_E + M_{G'}$, $C_Y + G$, and the modulation components attributed to the filter elements $Y_E + G$, $C_Y + M_{G'}$, $Y_E + G$, $C_Y + M_{G'}$, etc., are filtered, resulting in the average levels $E_{AVL}$.

Contour correction is obtained by deriving a component from a scan line of image signals that is not correlated with image signals picked up from adjacent scan lines. Accordingly, the averaged image signals produced by the low-pass filter 56 is subjected to a delay equal to one scan line interval by a 1H delay circuit 57; and this delayed, averaged scan line of image signals is subjected to another 1H delay by a 1H delay circuit 59. If the image signals produced at the output of the delay circuit 57 are considered to be the image signals produced during scan line n, then the image signals produced at the output of the delay circuit 59 are those which are obtained during scan line n-1 and the image signals produced at the output of the low-pass filter 56 are those which are produced at scan line n+1. The image signals from the line n are coupled to one input of a subtracting circuit 72 by way of a weighting circuit 69 which, for example, may be an amplifier. The image signals produced during the line n-1 which appear at the output of the delay circuit 59, are coupled to another input of the subtracting circuit 72 by way of a weighting circuit 70 and are subtracted from the image signals of the line n. Likewise, the image signals produced during the line n+1 are supplied from the output of the low-pass filter 56 to a further input of the subtracting circuit 72 by way of the weighting circuit 67 so as to be subtracted from the image signals produced during the line n. Preferably, the weighting circuits 67 and 70 are amplifiers, each having a gain, or weighting function, that is one-half the gain, or weighting function of the weighting circuit 69. Thus, for proper correlation, if the level of the image signals produced during the lines n, n-1 and n + 1 are all equal to E, then the subtracting circuit 72 functions to carry out the following operation:

$$E - E/2 - E/2$$

Differences that may be present from one line to the next appear as an uncorrelated component at the output of the subtracting circuit 72. This uncorrelated signal component, which is derived from adjacent lines n, n+1 and n - 1, is summed in an adding circuit 73 with the averaged image signals produced during the line n and supplied from the output of the delay circuit 57. The output of the adding circuit 73 comprises a contour-emphasized luminance signal Y. This contour-emphasized luminance signal is supplied to a video signal synthesizing circuit 76 which also is coupled to a chrominance signal processing circuit 74, the latter receiving the averaged image signals produced during the line n from the delay circuit 57 as well as the image signal produced by the image pick-up element 52 and amplified by the amplifier 54. The chrominance signal processing circuit 74 is of the usual form and operates to produce colour differences signals R-Y and B-Y which are combined with the contour-emphasized luminance signal in the video signal synthesizing circuit 76 to produce a synthesized video signal $S_v$.

As pointed out above, the inherent nature of the complementary colour matrix filter is such that an increase in brightness of the scene being imaged may result in an increase in the modulation signal level produced when, for example, an even line is scanned, sufficient to saturate amplifiers forming the weighting circuits 67, 69 or 70. As illustrated in Figures 7 and 8, saturation of an amplifier in response to the image signals produced when an even line is scanned but not when an odd line is scanned may cause the subtracting circuit 72 to produce an erroneous output. This output is interpreted as an extracted uncorrelated signal component and serves to emphasize the luminance signal improperly. Thus, even although contour correction may not be needed, the saturation of one or more amplifiers results in an inaccurate contour-emphasized luminance signal. Rather than suspend the contour correction operation in response to such an increase in the brightness level of the scene being imaged, as proposed heretofore, the present circuit connects clipping circuits 61, 63 and 65 to the inputs of the weighting circuits 67, 69 and 70 to clip the averaged image signals supplied to the weighting circuits, 67, 69 and 70 if those averaged image signals exceed a predetermined amount, thereby preventing them from being saturated.

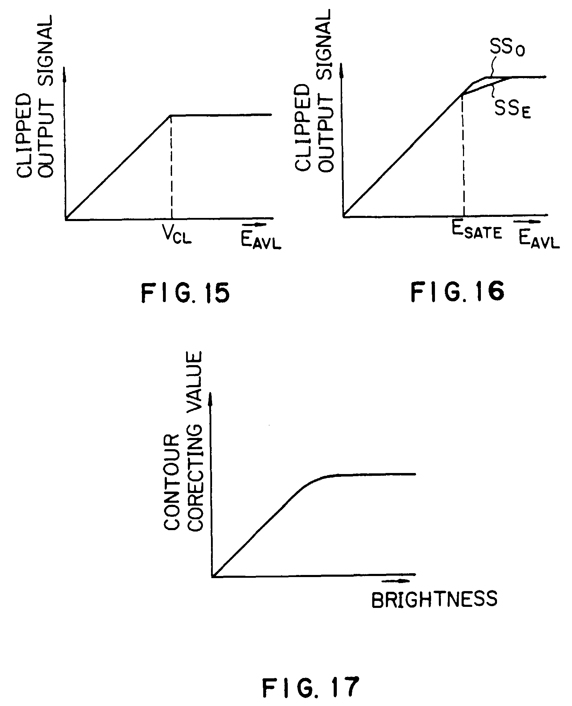

The advantages attained by incorporating the clipping circuits 61, 63 and 65 may best be appreciated by referring to Figures 15, 16 and 17. Figure 15 is a graphical representation of the relationship between the level of the average image signals $E_{AVL}$ and the clipped output signal produced by the clipping circuit 61, 63 or 65. The clipping level of each of these clipping circuits, 61, 62 and 65 is represented as $V_{CL}$; and it is seen that the output of the clipping circuit, 61, 63 or 65 increases linearly with the level of the averaged image signal (that is the signal is not clipped) until the level of the averaged image signal exceeds the clipping level $V_{CL}$. Thereafter, the clipping circuit output remains constant.

Figure 16 likewise is a graphical representation of the relationship between the level of the averaged image signal $E_{AVL}$ and the clipped output signal produced by the clipping circuit 61, 63 or 65. Figure 16 also indicates the average level $E_{SATE}$ of the image signal which contains modulation components of a magnitude sufficient to saturate the weighting circuit 67, 69 and 70, such as may be produced during an even scan line. It is assumed in Figure 16 that the average level of the image signals produced during an even scan line for a brightness which results in saturation of the amplifiers is less than the averaged level of the image signals produced during an odd scan line. If the image signal produced by the image pick-up element 52 during an even scan line is represented as $SS_E$ and the image signal produced by the image pick-up element 52 during an odd scan line is represented as $SS_o$, then it is seen in Figure 16 that the averaged level of the image pick-up signal $SS_E$ which results in amplifier saturation is lower than the averaged level of the image pick-up signal $SS_o$ which does not cause saturation. The clipping level $V_{CL}$ of the clipping circuits is set to be less than the lowest average level of an even or odd scan line of image signals which would result in saturation. Accordingly, in the present example wherein it is assumed that the modulation components of an even line of image signals will result in saturation but the modulation components of an odd line of image signals will not, and wherein it is further assumed that the average level of the even line of image signals for that occurrence is $E_{SATE}$, then $V_{CL} < E_{SATE}$. Hence, the averaged image signals are clipped before the average level thereof reaches the saturation level $E_{SATE}$.

From Figure 17, it is seen that, as the brightness of the imaged object increases, contour correction likewise increases in a linear manner. However, when the brightness reaches a level such that the averaged image signal produced in response thereto exceeds the clipping level $V_{CL}$, contour correction approaches a constant value which no longer changes with an increase in brightness. This is compared with the prior art relationship between brightness and contour correction shown in Figure 9, whereby contour correction is suspended when the brightness of the object being imaged exceeds a threshold level. In the present circuit contour correction is not suspended but, rather, remains constant. Thus, the vertical contour correction is achieved even if the brightness of the object being imaged is quite high.

Although a change in brightness may result in different average levels of the image signals produced during even and odd scan lines, such as shown in Figures 7 and 8, if the averaged image signals are clipped at higher brightness levels, the average levels tend to be substantially equal to each other. Hence, difficulties caused by difference in the average levels of the image signals produced during even and odd scan lines are avoided.

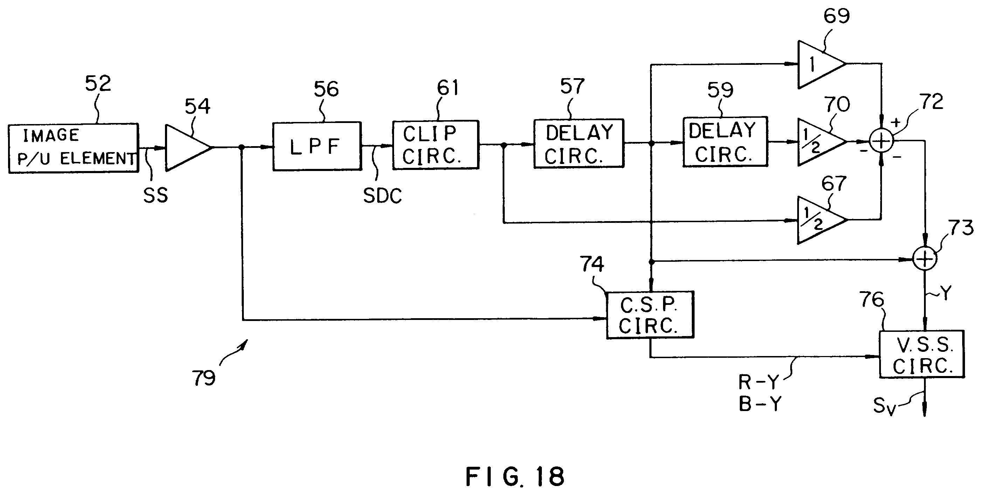

Another example of the contour correcting apparatus shown in Figure 14 is illustrated in Figure 18, and differ from that shown in Figure 14 in that the individual clamping circuits 61, 63 and 65 through which the respective scan lines of averaged image signals are supplied to the weighting circuits 67, 69 and 70 in Figure 14 are replaced by a single clipping circuit 61 connected directly to the output of the low-pass filter 56 in Figure 18. Nevertheless, in the Figure 18 example, clipped, averaged image signals from the scan line n are supplied to the weighting circuit 69, clipped averaged image signals from the line n-1 are supplied to the weighting circuit 70 and clipped averaged image signals from the line n+1 are supplied to the weighting circuit 67. Hence, the example shown in Figure 18 operates in substantially the same way as the example of Figure 14. It will be appreciated that, functionally, there is no substantial difference between clipping the averaged image signals before or after they are delayed by the delay circuits 57 and 59.

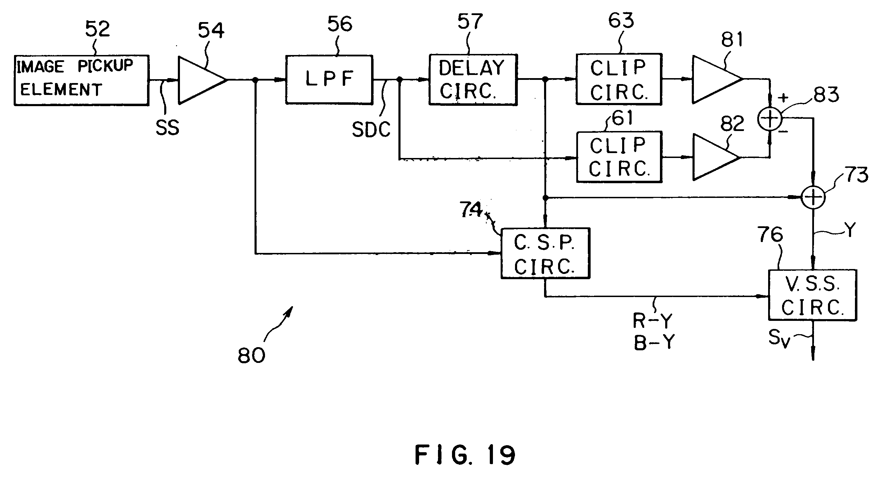

Yet another example of contour correcting apparatus is illustrated in Figure 19, the difference compared with Figure 14 being that whilst in Figure 14 differences between the averaged image signals in the line n and the averaged image signals in the adjacent lines n+1 and n-1 are extracted, the example of Figure 19 extracts differences in the averaged image signals between the lines n and n+1. Accordingly, only one 1H delay circuit 57 is provided; and the delay circuit 57 supplies the averaged image signals in the line n to one input of a subtracting circuit 83 from which the averaged image signals in the line n+1 are subtracted. It is seen that weighting circuits 81 and 82 supply the averaged image signals of lines n and n+1, respectively, to the subtracting circuit. The weighting circuits 81 and 82 impart equal weight to the image signals supplied thereby and, in one example, they comprise amplifiers having substantially equal gains.

Nevertheless, to prevent the average level of the averaged image signals supplied to the subtracting circuit 83 from exceeding the saturation voltage of amplifiers forming the weighting circuits 81 and 82, the clipping circuits 61 and 63 prevent the averaged image signals from reaching the saturation voltage. Of course, the subtracting circuit 83 extracts a signal component that is not correlated from the line n to the line n+1; and this extracted uncorrelated component is added to the averaged image signal of the line n to produce the contour-emphasized luminance signal Y. Vertical contour correction of the video signal thus is obtained.

Various changes and modifications may be made. For example, the image pick-up element that may be used in each example can be implemented as a CCD element or other solid-state pick-up devices. Alternatively, the image pick-up device may comprise a cathode ray tube. Furthermore, in the example of Figure 10, the replacement black signal level $W_{24}$ (described in conjunction with Figure IID) need not be exactly equal to the optical black signal level $W_{22}$. Rather, depending upon the reference level which is used by the individual processing circuits that clamp this replacement black signal level, the replacement black signal level may be shifted to be greater or less than the optical black signal level by a desired amount. Still further, in the contour correction apparatus shown in Figures 14, 18 and 19, the delays imparted to the averaged image signal by the delay circuits 57 and 59 need not be limited solely to a 1H delay. Rather, the delay imparted to the image signal may be equal to two or more horizontal scanning periods.

## Claims

1. Video signal processing apparatus for use with video imaging means (13) having line scanning and flyback periods, the apparatus comprising:
   image signal means (14) for providing useful video information during said line scanning period and an optical black signal level during at least one portion of said flyback period;
   the apparatus being characterised by:
   replacement means (25) for inserting during another portion of said flyback period a replacement black signal level that is a function of said optical black signal level.

2. Apparatus according to claim 1 wherein said image signal means (14) includes a reference source (23) for providing a reference signal, comparator means (22) for providing a comparison of said optical black signal level with said reference signal, and adjustment means (21) for adjusting said optical black signal level as a function of said comparison.

3. Apparatus according to claim 2 wherein said replacement means (25) includes means (26) for deriving said replacement black signal level from said reference signal; and switch means (25) for normally selecting said useful video information and the adjusted optical black signal level and for selecting said replacement black signal level during said other portion of said flyback period.

4. Apparatus according to claim 3 wherein said replacement means (25) further includes timing signal generating means (12) for supplying a change-over timing signal to said switch means (25) having a duration equal to said other portion of said flyback period to cause said switch means (25) to select said replacement black signal level.

5. The apparatus according to claim 4 wherein said timing signal generating means (12) further generates an enabling signal during said one portion of said flyback period for enabling said comparator means (22).

6. Apparatus according to claim 5 wherein said adjustment means (21) comprises DC level shifting means (21) for receiving said useful video information and said optical black signal level and responsive to the comparison provided by said comparator means (22) for shifting the DC level of said useful video information and optical black signal level.

7. Apparatus according to claim 4 wherein said means (26) for deriving said replacement black signal level comprises level processing means (26) for processing said reference signal to a level substantially equal to said optical black signal level.

8. Apparatus according to claim 1 wherein said video imaging means (13) includes pick-up means (13) having an image pick-up surface and an optical black surface, and means for scanning said image pick-up surface during said line scanning period and for scanning said optical black surface during said flyback period to produce an image pick-up signal, and wherein said image signal means (14) comprises sampling means (15) for sampling said image pick-up signal and automatic gain control means (16) coupled to said sampling means (15) to provide said useful video information and said optical black signal level.

**Patentansprüche**

1. Videosignal-Verarbeitungsvorrichtung für die Verwendung mit einer Video-Abbildungseinrichtung (13), die Zeilenabtast- und Rücklaufperioden aufweist, umfassend:
eine Bildsignaleinrichtung (14) zur Bereitstellung einer brauchbaren Videoinformation während der genannten Zeilenabtastperiode und eines optisch schwarzen Signalpegels während zumindest eines Teiles der genannten Rücklaufperiode,
**gekennzeichnet durch**
eine Ersatzeinrichtung (25) zur Einfügung eines Ersatz-Schwarzsignalpegels während eines anderen Teiles der genannten Rücklaufperiode, wobei der betreffende Ersatz-Schwarzsignalpegel eine Funktion des genannten optisch schwarzen Signalpegels ist.

2. Vorrichtung nach Anspruch 1, wobei die genannte Bildsignaleinrichtung (14) eine Referenzquelle (23) für die Bereitstellung eines Referenzsignals, eine Komparatoreinrichtung (22) für die Vornahme eines Vergleichs des genannten optisch schwarzen Signalpegels mit dem genannten Referenzsignal und eine Einstelleinrichtung (21) umfaßt zur Einstellung des genannten optisch schwarzen Signalpegels als Funktion des genannten Vergleichs.

3. Vorrichtung nach Anspruch 2, wobei die genannte Ersatzeinrichtung (25) eine Einrichtung (26) zur Ableitung des genannten Ersatz-Schwarzsignalpegels von dem genannten Referenzsignal und eine Schalteinrichtung (25) umfaßt zur normalerweisen Auswahl der genannten brauchbaren Videoinformation und des eingestellten optisch schwarzen Signalpegels und zur Auswahl des genannten Ersatz-Schwarzsignalpegels während des genannten anderen Teiles der genannten Rücklaufperiode.

4. Vorrichtung nach Anspruch 3, wobei die genannte Ersatzeinrichtung (25) ferner eine Zeitsteuersignal-Erzeugungseinrichtung (12) für die Abgabe eines Umschalt-Zeitsteuersignals an die genannte Schalteinrichtung (25) umfaßt, welches eine Dauer aufweist, die gleich dem genannten anderen Teil der genannten Rücklaufperiode ist, um die genannte Schalteinrichtung (25) zu veranlassen, den genannten Ersatz-Schwarzsignalpegel auszuwählen.

5. Vorrichtung nach Anspruch 4, wobei die genannte Zeitsteuersignal-Erzeugungseinrichtung (12) ferner ein Freigabesignal während des genannten einen Teiles der genannten Rücklaufperiode zur Freigabe der genannten Komparatoreinrichtung (22) erzeugt.

6. Vorrichtung nach Anspruch 5, wobei die genannte Einstelleinrichtung (21) eine Gleichspannungspegel-Verschiebeeinrichtung (21) umfaßt, die die genannte brauchbare Videoinformation und den genannten optisch schwarzen Signalpegel aufnimmt und die auf den durch die genannte Komparatoreinrichtung (22) durchgeführten Vergleich hin den Gleichspannungspegel der genannten brauchbaren Videoinformation und den optisch schwarzen Signalpegel verschiebt.

7. Vorrichtung nach Anspruch 4, wobei die genannte Einrichtung (26) zur Ableitung des genannten Ersatz-Schwarzsignalpegels eine Pegelverarbeitungseinrichtung (26) zur Verarbeitung des genannten Referenzsignals auf einem Pegel, der im wesentlichen gleich dem optisch schwarzen Signalpegel ist, umfaßt.

8. Vorrichtung nach Anspruch 1, wobei die genannte Video-Abbildungseinrichtung (13) eine Aufnahmeeinrichtung (13) mit einer Bildaufnahmefläche und einer optisch schwarzen Fläche sowie eine Einrichtung zur Abtastung der genannten Bildaufnahmefläche während der genannten Zeilenabtastperiode und zur Abtastung der genannten optisch schwarzen Fläche während der genannten Rücklaufperiode zur Erzeugung eines Bildaufnahmesignals umfaßt
und wobei die genannte Bildsignaleinrichtung (14) eine Abtasteinrichtung (15) für die Abtastung des genannten Bildaufnahmesignals und eine mit der genannten Abtasteinrichtung (15) verbundene automatische Verstärkungssteuereinrichtung (16) für die Bereitstellung der genannten brauchbaren Videoinformation und des genannten optisch schwarzen Signalpegels umfaßt.

## Revendications

1. Appareil de traitement de signal vidéo utilisé avec un moyen de prise de vue vidéo (13) ayant des périodes de balayage de ligne et de retour de faisceau, l'appareil comprenant :

   un moyen de signal d'image (14) pour fournir des informations vidéo utiles pendant ladite période de balayage de ligne et un niveau de signal de noir optique pendant au moins une partie de ladite période de retour de faisceau ;

   l'appareil étant caractérisé par :

   un moyen de remplacement (25) pour insérer pendant une autre partie de ladite période de retour de faisceau un niveau de signal de noir de remplacement qui est fonction dudit niveau de signal de noir optique.

2. Appareil selon la revendication 1 dans lequel ledit moyen de signal d'image (14) comprend une source de référence (23) pour fournir un signal de référence, un moyen comparateur (22) pour fournir une comparaison dudit niveau de signal de noir optique avec ledit signal de référence, un moyen de réglage (21) pour régler ledit niveau de signal de noir optique en fonction de ladite comparaison.

3. Appareil selon la revendication 2 dans lequel ledit moyen de remplacement (25) comprend un moyen (26) pour dériver ledit niveau de signal de noir de remplacement à partir dudit signal de référence ; un moyen de commutation (25) pour sélectionner normalement lesdites informations vidéo utiles et le niveau de signal de noir optique réglé et pour sélectionner ledit niveau de signal de noir de remplacement pendant ladite autre partie de ladite période de retour de faisceau.

4. Appareil selon la revendication 3 dans lequel ledit moyen de remplacement (25) comprend en outre des moyens de générateur de signal de temporisation (12) pour fournir un signal de temporisation d'inverseur audit moyen de commutation (25) ayant une durée égale à ladite autre partie de ladite période de retour de faisceau pour provoquer la sélection par ledit moyen de commutation (25) dudit niveau de signal de noir de remplacement.

5. Appareil selon la revendication 4 dans lequel ledit moyen de générateur de signal de temporisation (12) génère en outre un signal de validation pendant ladite une partie de ladite période de retour de faisceau pour valider ledit moyen comparateur (22).

6. Appareil selon la revendication 8 dans lequel ledit moyen de réglage (21) comprend un moyen de décalage de niveau de courant continu (21) pour recevoir lesdites informations vidéo utiles et ledit niveau de signal de noir optique et sensible à la comparaison fournie par ledit moyen comparateur (22) pour décaler le niveau de courant continu desdites informations vidéo utiles et le niveau de signal de noir optique.

7. Appareil selon la revendication 4 dans lequel ledit moyen (26) pour dériver ledit niveau de signal de noir de remplacement comprend un moyen de traitement de niveau (26) pour traiter ledit signal de référence à un niveau substantiellement égal audit niveau de signal de noir optique.

8. Appareil selon la revendication 1 dans lequel ledit moyen de prise de vue vidéo (13) comprend un moyen de prise de vue (13) ayant une surface de prise de vue d'image et une surface de noir optique, et un moyen pour balayer ladite surface de prise de vue d'image pendant ladite période de balayage de ligne et pour balayer ladite surface de noir optique pendant ladite période de retour de faisceau pour produire un signal de prise de vue d'image, et où ledit moyen de signal d'image (14) comprend un moyen d'échantillonnage (15) pour échantillonner ledit signal de prise de vue d'image et un moyen de commande de gain automatique (16) couplé audit moyen d'échantillonnage (15) pour fournir lesdites informations vidéo utiles et ledit niveau de signal de noir optique.

FIG. 1

FIG. 2

FIG. 3

| $Y_E$ | $C_Y$ |
|-------|-------|
| $M_G$ | G |
| $Y_E$ | $C_Y$ |
| G | $M_G$ |

EVEN LINE

ODD LINE

FIG.4

FIG. 5

FIG. 6

FIG. 7

FIG. 8

FIG. 9

F I G. 10

F I G. 11

F I G. 12

F I G. 13

FIG.14

EP 0 424 111 B1

FIG. 15

FIG. 16

FIG. 17

FIG. 18

FIG. 19

EP 0 424 111 B1